Europäisches Patentamt

European Patent Office

Office européen des brevets

(19)

(11) Publication number: **0 205 456
B1**

# (12) EUROPEAN PATENT SPECIFICATION

(45) Date of publication of patent specification: **04.01.89**

(51) Int. Cl.⁴: **B 60 N 1/02,** B 66 F 9/20

(21) Application number: **85905216.9**

(22) Date of filing: **25.10.85**

(86) International application number:
**PCT/FI85/00084**

(87) International publication number:
**WO 86/02890 22.05.86 Gazette 86/11**

(54) **DEVICE FOR A MANEUVER MEMBER AT A ROTABLE DRIVER'S SEAT.**

(30) Priority: **16.11.84 FI 844520**

(43) Date of publication of application:
**30.12.86 Bulletin 86/52**

(45) Publication of the grant of the patent:
**04.01.89 Bulletin 89/01**

(84) Designated Contracting States:
**AT BE CH DE FR GB IT LI LU NL SE**

(56) References cited:
**AT-B- 311 190
SE-B- 405 709**

(73) Proprietor: **CARLSON PROJECT KB. KY.
SF-65760 Iskmo (FI)**

(72) Inventor: **CARLSON, Tore
Kuopiogatan 1 B 16
SF-65350 Vasa (FI)**

(74) Representative: **Smulders, Theodorus A.H.J.
et al
Vereenigde Octrooibureaux Nieuwe Parklaan
107
NL-2587 BP 's-Gravenhage (NL)**

Courier Press, Leamington Spa, England.

## Description

The present invention is concerned with a device for a maneuver member comprising a pivotable and turnable, preferably T-shaped maneuver lever for regulating the speed and direction of run of a slip-steered vehicle, the said maneuver member being attached to the rotable driver's seat of the vehicle.

Working machines and other vehicles on which the driver, depending on the phases of work, must look both forwards and rearwards are usually provided with rotable driver's seats. In slip-steered vehicles, on which the maneuvering of the vehicle takes place by means of a single T-shaped maneuver lever, the maneuver member was, in prior art, mounted on a console projecting from the driver's seat and following the movement of rotation of the seat. With the driver's seat in the original position, the vehicle is arranged so that it is driven forwards when the maneuver lever is shifted forwards from its starting position, and rearwards when the maneuver lever is shifted rearwards from its starting position, and it is turned in the direction in which the maneuver lever is turned around its longitudinal axis. As a result of the fixed installation, the whole maneuver member is turned on rotation of the driver's seat so that the same side of the maneuver member is all the time directed towards the driver. When the driver's seat has been turned, e.g., by 180° from its original postion, a certain shift of the maneuver lever will result in a directly opposite movement of the vehicle, as compared with what could be expected. If, e.g., the driver shifts the maneuver lever rearwards and, at the same time, turns it to the right, the vehicle will move forwards and turn to the left. Owing to this, at least an unexperienced driver has very great problems in maneuvering such a vehicle, in particular in narrow passages.

The object of the present invention is to eliminate this problem, which is achieved thereby that the maneuver member is attached to the driver's seat rotably and linked with the stationary part of the foot of the driver's seat by means of connecting members which maintain the direction of the maneuver member relative the longitudinal axis of the vehicle as the maneuver member, during rotation of the driver's seat, follows along a circular path around the foot of the driver's seat. By means of this arrangement, the maneuver lever retains its logical function irrespective of how the driver's seat is turned.

The other characteristics of the invention come out from the accompanying patent claims 1 to 6.

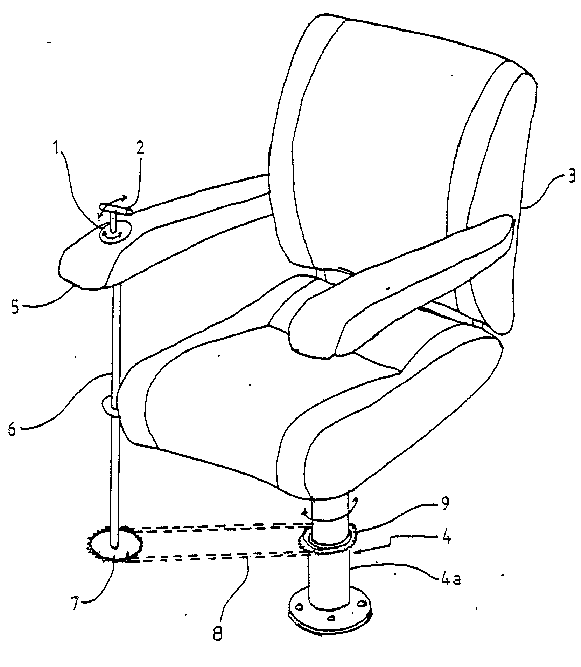

In the following, the invention will be described in more detail with reference to the accompanying drawing, which shows an example of how a maneuver member can be arranged at a rotable seat in accordance with the invention.

The maneuver member 1 with the maneuver lever 2, which is in this case T-shaped, is, according to the present invention, rotably attached to the rotable driver's seat 3 and connected to the stationary part 4a of the foot 4 of the driver's seat in such a way that, during rotation of the driver's seat 3, the maneuver member 1 follows along a circular path around the foot 4 of the driver's seat while retaining its direction relative the longitudinal direction of the vehicle. By means of this arrangement, the directions of the maneuver movements of the maneuver lever 2 remain logical all the time, irrespective of the position at each particular time adopted by the driver's seat. The vehicle is always set to move in the direction in which the maneuver lever 2 is shifted, and it always turns towards the side to which the maneuver lever 2 is turned around its longitudinal axis in the particular case.

The maneuver member 1 may be mounted either on a console projecting forwards from the driver's seat or on one of the arm rests 5 of the driver's seat, preferably the right one. The latter alternative may be concerned mainly in the case that the maneuvering of the vehicle is servo-assisted, whereby the maneuver member 1 consists of a valve member provided with two passages, which are regulated independently from each other by means of one and the same maneuver lever 2.

The maneuver member 1 can be connected to the stationary part 4a of the foot 4 of the driver's seat 4, e.g., by means of a vertical shaft 6 stationarily mounted to the bottom side of the maneuver member 1 and provided with a cogwheel 7 or equivalent at its bottom end, which said cogwheel 7 is, by means of an endless chain 8, connected to an equally large cogwheel 9 stationarily fixed to the said stationary part 4a. As a result of this arrangement, the maneuver member 1 will always be directed in the same direction relative the longitudinal axis of the vehicle.

The connection of the maneuver member 1 to the stationary part 4a of the foot 4 of the driver's seat may also be achieved by means of a twist-proof wire, whose top end is fixed to the bottom side of the maneuver member 1 and whose bottom end is passed into the preferably column-shaped foot 4 of the driver's seat 3 and fixed to its stationary part 4a. The latter solution is somewhat simpler and less expensive to accomplish than the former one.

The drawing does not show the connecting pipes to the servo aggregate of the vehicle, nor the regulating members, e.g., for the hydraulic pumps of the vehicle, but these can be drawn appropriately along the arm rest 5 of the driver's seat and along its back as well as through its foot 4 to the said components of the vehicle.

## Claims

1. Device for a maneuver member (1) comprising a pivotable and turnable, preferably T-shaped maneuver lever (2) for regulating the speed and direction of run of a slip-steered vehicle, the said maneuver member being attached to the rotable driver's seat (3) of the vehicle, characterized in that the maneuver member (1) is attached to the driver's seat (3) rotably and linked with the stationary part (4a) of the foot (4) of the seat by means of connecting members (6, 7, 8, 9) which maintain the direction of the maneuver member (1) relative the longitudinal axis of the vehicle as the maneuver member (1), during rotation of the driver's seat (3), follows along a circular path around the foot (4) of the driver's seat.

2. Device as claimed in claim 1, charactered in that the maneuver member (1) is mounted on one of the arm rests (5) of the driver's seat.

3. Device as claimed in claim 2, characterized in that the connecting members (6, 7, 8, 9) comprise a vertical shaft (6) stationarily mounted to the bottom side of the maneuver member (1), a cogwheel (7) or equivalent fitted at the bottom end of the said shaft (6), in line with this, an equally large cogwheel (9), fixed to the stationary part (4a) of the foot (4) of the driver's seat, as well as an endless chain (8) passed over these said cogwheels (7, 9).

4. Device as claimed in claim 2, characterized in that the connecting member comprises a twist-proof wire, whose top end is fixed to the maneuver member (1) and whose bottom end is passed into the preferably column-shaped foot (4) of the driver's seat and fixed to its stationary part (4a).

5. Device as claimed in any of the claims 1 to 4, characterized in that the maneuver member (1) is supposed to regulate the steering and drive functions on a hydrostatically driven vehicle.

6. Device as claimed in claim 5, characterized in that the maneuvering is servo-assisted.

**Patentansprüche**

1. Vorrichtung für ein Steurorgan (1) versehen met einem schwenk- und drehbaren, vorzugsweise T-förmigen Steuerhebel (2) zum Steuern der Geschwindigkeit und Fahrtrichtung eines schlufgesteuerten Fahrzeuges, wobei das Steuerorgan am drehbaren Fahrersitz (3) des Fahrzeuges befestigt is, dadurch gekennzeichnet, dass das Steuerorgan (1) drehbar am Fahrersitz (3) befestigt ist und mit dem ortsfesten Teil (4a) des Fusses (4) dieses Sitzes durch Verbindungsmittel (6, 7, 8, 9) verbunden ist, welche die Richtung des Steuerorgans (1) relativ zur Längsachse des Fahrzeuges instandhalten, wenn das Steuerorgan (1) beim Drehen des Fahrersitzes (3) einer kreisformigen Bahn um den Fuss (4) des Fahrersitzes folgt.

2. Vorrichtung nach Anspruch 1, dadurch gekennzeichnet, dass das Steuerorgan (1) an einer der Armlehnen (5) des Fahrersitzes angeordnet ist.

3. Vorrichtung nach Anspruch 2, dadurch gekennzeichnet, dass die Verbindungsmittel (6, 7, 8, 9) einen vertikalen Schacht (6) der ortsfest unten am Steuerorgan (1) angeordnet ist, ein Zahnrad (7) oder dergleichen, das unten am Schacht (6) und mit diesem fluchtend angeordnet ist, ein gleich grosses Zahnrad (9), das am ortsfesten Teil (4a) des Fusses (4) des Fahrersitzes befestigt ist, sowie eine über diese Zahnräder (7, 9) laufende endlose Kette (8) umfassen.

4. Vorrichtng nach Anspruch 2, dadurch gekennzeichnet, dass das Verbindungsmittel einen torsionsfesten Draht umfasst, dessen oberes Ende am Steuerorgan (1) befestigt ist, und dessen unteres Ende in den vorzugsweise säulenförmigen Fuss (4) des Fahrersitzes geführt und an dessen ortsfestem Teil (4a) befestigt ist.

5. Vorrichtung nach einem der Ansprüche 1 bis 4, dadurch gekennzeichnet, dass das Steuerorgan (1) die Steuer und Antriebsfunktionen bei einem hydrostatisch angetriebenen Fahrzeug steuern soll.

6. Vorrichtung nach Anspruch 5, dadurch gekennzeichnet, dass das Fahrzeug mit Servoeinrichtung versehen ist.

**Revendications**

1. Un dispositif pour un organe de manoeuvre (1) comprenant un levier de manoeuvre (2) pivotant et tournant, de preference en forme de T, pour régler la vitesse et la direction de marche d'un vehicule à direction à glissement, ledit organe de manoeuvre etant attaché au siège du conducteur rotatif (3) du véhicule, caractérisé en ce que l'organe de manoevre (1) est attaché au siège du conducteur (3) de facon rotative et est joint à la partie fixe (4a) du pied (4) du siège à l'aide d'organes de raccord (6, 7, 8, 9) qui maintiennent la direction de l'organe de manoeuvre (1) par rapport à l'axe longitudinal du véhicule quand l'organe de manoevre (1), pendant la rotation du siège du conducteur (3), suit un traject circulaire autour du pied (4) du siège du conducteur.

2. Un dispositif selon la revendication 1, caractérisé en ce que l'organe de manoeuvre (1) est monté sur l'un des appuis-bras (5) du siège du conducteur.

3. Un dispositif selon la revendication 2, caractérisé en ce que les organes de raccord (6, 7, 8, 9) comprennent un arbre vertical (6) monté de facon fixe sur le côté inférieur, de l'organe de manoevre (1), une roue dentée (7) ou equivalent montée sur l'extrémité inféieure dudit arbre (6) alignée à celle-ci, une roue dentée (9) de même largeur, fixée sur la partie fixe (4a) du pied (4) du siège du conducteur, ainsi qu'une chaîne sans fin (8) s'engrenant sur lesdites roues denées (7, 9).

4. Un dispositif selon la revendication 2, caractérisé en ce que l'organe de raccord comprend un fil résistant à la torsion, dont l'extrémité supérieure est fixée à l'organe de manoevre (1) et dont l'extrémité inférieure s'étend dans le pied (4) de préférence en forme de colonne du siège du conducteur et fixée à sa partie fixe (4a).

5. Un dispositif selon l'une quelconque des revendications 1—4, caractérisé en ce que l'organe de manoevre (1) est adapté à régler les fonctions de direction et de conduite sur un véhicule conduit hydrostatiquement.

6. Un dispositif selon la revendication 5, caractérisé en ce que l'action de manoevre a lieu à l'aide d'un servo-régulateur.